(19) Europäisches Patentamt
European Patent Office
Office européen des brevets

(11) Veröffentlichungsnummer: **0 016 393**
**B1**

(12) # EUROPÄISCHE PATENTSCHRIFT

(45) Veröffentlichungstag der Patentschrift: **18.05.83**

(51) Int. Cl.³: **C 01 B 33/26**, C 01 B 33/28

(21) Anmeldenummer: **80101214.7**

(22) Anmeldetag: **10.03.80**

(54) **Verfahren zur Herstellung von amorphen Natriumaluminiumsilikaten.**

(30) Priorität: **15.03.79 DE 2910147**

(43) Veröffentlichungstag der Anmeldung:
**01.10.80 Patentblatt 80/20**

(45) Bekanntmachung des Hinweises auf die Patenterteilung:
**18.05.83 Patentblatt 83/20**

(84) Benannte Vertragsstaaten:
**AT BE CH DE FR GB IT NL SE**

(56) Entgegenhaltungen:
**DD-A-132 069**
**DE-B-1 038 017**
**FR-A-2 370 688**
**FR-A-2 370 689**

(73) Patentinhaber: **Henkel Kommanditgesellschaft auf Aktien, Postfach 1100 Henkelstrasse 67, D-4000 Düsseldorf 1 (DE)**
Patentinhaber: **Degussa Aktiengesellschaft, Weissfrauenstrasse 9, D-6000 Frankfurt am Main 1 (DE)**

(72) Erfinder: **Christophliemk, Peter, Dr., Kärntner Weg 44a, D-4000 Düsseldorf 13 (DE)**
Erfinder: **Wüst, Willi, Dr., Fasanenring 32, D-4030 Ratingen-Hösel (DE)**
Erfinder: **Carduck, Franz-Josef, Dr., Landstrasse 18, D-5657 Haan (DE)**

**EP 0 016 393 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

«Verfahren zur Herstellung von amorphen Natriumaluminiumsilikaten»

Gegenstand der Erfindung ist ein Verfahren zur kontinuierlichen Herstellung feinteiliger röntgenamorpher Natriumaluminiumsilikate, die zur Umwandlung in feinstteilige zeolithische Natriumaluminiumsilikate befähigt sind, durch Vermischen einer wässrigen Natriumaluminatlösung mit einer wässrigen Natriumsilikatlösung in Gegenwart überschüssiger Natronlauge oberhalb Raumtemperatur.

Beim Vermischen von Natriumaluminat- mit Natriumsilikatlösungen bildet sich unter den genannten Bedingungen – insbesondere bei Temperaturen oberhalb 60 °C – bei allen in der Technik gebräuchlichen Ansatz- und Konzentrationsbereichen der Reaktionspartner augenblicklich ein Niederschlag von amorphem Natriumaluminiumsilikat. Von technischer Bedeutung ist insbesondere der nachstehende Ansatzbereich, welcher folgende Molverhältnisse der Reaktionspartner umfasst:

$$1{,}5 \text{ bis } 9\ Na_2O:1\ Al_2O_3:1 \text{ bis } 7\ SiO_2:40 \text{ bis } 400\ H_2O.$$

Eine darüber hinausgehende Alkalität, ein höherer Silikatgehalt oder eine stärkere Verdünnung des Fällansatzes sind technisch nicht sinnvoll. Ein niedrigerer Wassergehalt des Ansatzes als der oben angegebene führt zu besonders starker Klumpenbildung im Niederschlag sowie zu uneinheitlichen Produkten.

Bei den genannten Ansatzverhältnissen fällt primär stets ein amorphes Natriumaluminiumsilikat mit einem hohen Überschuss an Natronlauge aus, welches eine chemische Zusammensetzung entsprechend Molverhältnissen von

$$1 \text{ bis } 5\ Na_2O:1\ Al_2O_3:1{,}8 \text{ bis } 4\ SiO_2$$

aufweist. Nach Auswaschen des überschüssigen Alkalis erhält man röntgenamorphe Produkte mit einer chemischen Zusammensetzung entsprechend Molverhältnissen von

$$0{,}9 \text{ bis } 1{,}1\ Na_2O:1\ Al_2O_3:1{,}8 \text{ bis } 4\ SiO_2,$$

deren Wassergehalt vom Trocknungsgrad abhängt. Der Silikatgehalt des Fällungsproduktes wird weitgehend vom Molverhältnis $SiO_2:Al_2O_3$ im Fällansatz bestimmt.

Die beim Vermischen von Aluminat- mit Silikatlösungen oberhalb Raumtemperatur sich augenblicklich bildenden Niederschläge von amorphem Natriumaluminiumsilikat führen zur Bildung eines zunächst nicht mehr fliessfähigen Reaktionsgemisches. Dadurch wird einerseits eine gründliche und vollständige Durchmischung der beiden Reaktionskomponenten und somit auch der Erhalt eines homogenen Reaktionsproduktes erschwert sowie andererseits auch eine gewünschtenfalls anschliessende Kristallisation des amorphen Produktes verzögert. Darüber hinaus bedingt dieser Effekt die Bildung eines relativ grobkörnigen Produktes, das hohe Anteile mit einem Korndurchmesser grösser als 50 µm aufweist. Bei einer diskontinuierlich ausgeführten Fällung von Natriumaluminiumsilikat lässt sich das nicht mehr fliessfähige Reaktionsgemisch üblicherweise durch eine hinreichend lange Anwendung starker Scherkräfte wieder verflüssigen.

Ferner wird in der FR-A-2 370 689 ein Verfahren zur Herstellung eines feinteiligen kristallinen Zeolithpulvers des Typs A durch Vermischen einer wässrigen Alkalisilikatlösung mit wässriger Natronlauge und Natriumaluminatlauge sowie anschliessender Kristallisation beschrieben. In der Fällstufe wird eine Komponente vorgelegt und die andere unter Rühren hinzugefügt, wobei für die Zeit von 10 bis 30 Minuten die Bildung eines unlöslichen Gels verhindert wird. Anschliessend wird dem Gemisch unter Rühren weitere wässrige Natriumaluminatlauge innerhalb einer Zeit von 10 bis 200 Minuten zugegeben. Hierbei handelt es sich gleichfalls um ein diskontinuierliches Verfahren, das zur Erzielung eines entsprechenden feinteiligen Produktes hinreichend lange Reaktionszeiten erfordert.

Einer kontinuierlichen Ausfällung von amorphem Natriumaluminiumsilikat stand jedoch bislang im Wege, dass die zur Verfügung stehende – durch die kontinuierliche Verfahrensweise bedingt – nur kurze Zeitspanne nicht ausreichte, um das nicht fliessfähige Reaktionsgemisch hinreichend zu zerkleinern bzw. zu zerschlagen und es so wieder zu verflüssigen.

Die Aufgabe der vorliegenden Erfindung war es daher, ein Verfahren zur Herstellung amorpher Natriumaluminiumsilikate zu entwickeln, das einen kontinuierlichen Verfahrensablauf mit einer hohen Raum/Zeit-Ausbeute auch ohne die Anwendung starker Scherkräfte ermöglicht, bei dem jedoch die vorstehend erwähnten Nachteile vermieden werden.

Gegenstand der Erfindung ist somit ein Verfahren zur kontinuierlichen Herstellung einer wässrigen, alkalischen Suspension feinteiliger röntgenamorpher Natriumaluminiumsilikate, die zu mindestens 99 Vol.-% eine Teilchengrösse von kleiner als 50 µm aufweisen und zur Umwandlung in feinstteilige zeolithische Natriumaluminiumsilikate befähigt sind, durch Vermischen einer wässrigen Natriumaluminatlösung mit einer wässrigen Natriumsilikatlösung in Gegenwart überschüssiger Natronlauge bei Temperaturen im Bereich von 20 bis 103 °C, wobei die beiden zu vermischenden Lösungen eine rechnerische Gesamtzusammensetzung bezüglich der Molverhältnisse von

$$1{,}5 \text{ bis } 9\ Na_2O:1\ Al_2O_3:1 \text{ bis } 7\ SiO_2:40 \text{ bis } 400\ H_2O$$

aufweisen, das dadurch gekennzeichnet ist, dass man eine der beiden Reaktionskomponenten kontinuierlich in eine stufig wirkende Mischstrecke einströmen lässt und die zweite Reaktionskomponente aufgeteilt in drei oder mehr Teilströme,

deren Dosierung insgesamt durch die rechnerische Gesamtzusammensetzung der beiden Lösungen vorgegeben ist, mit der ersten Reaktionskomponenten vermischt, wobei man mit dem ersten Teilstrom zunächst nur 40 bis 60% der zweiten Reaktionskomponenten, bezogen auf das durch die rechnerische Gesamtzusammensetzung vorgegebene Verhältnis der beiden Lösungen, dem Strom der ersten Reaktionskomponenten kontinuierlich zufügt und die weiteren Teilströme dem Strom des gebildeten Reaktionsgemisches erst stromabwärts, jeweils nach einer mittleren Verweilzeit der Reaktionspartner in der Mischstrecke von mindestens 5 Sekunden, gleichfalls kontinuierlich, zudosiert.

Von wesentlicher Bedeutung für das erfindungsgemässe Verfahren ist mithin das Aufteilen oder Splitten der zweiten Reaktionskomponenten in mehrere Teilströme, die getrennt voneinander mit dem Strom der ersten Reaktionskomponenten bzw. des Reaktionsgemisches vermischt werden. Während die erste Reaktionskomponente in einem ungeteilten Strom kontinuierlich in die Mischstrecke einfliesst, wird gleichzeitig die zweite Reaktionskomponente zunächst nur im Unterschuss, bezogen auf die rechnerische Gesamtzusammensetzung der beiden zu vermischenden Lösungen, dem Strom der ersten Reaktionskomponenten kontinuierlich zugefügt und der Rest dieser zweiten Reaktionskomponenten erst dem Strom des bereits vorliegenden Reaktionsgemisches in mehreren Anteilen – jeweils mit einer zeitlichen Verzögerung – kontinuierlich zudosiert.

Durch das Aufteilen bzw. Splitten einer der beiden Reaktionskomponenten lässt sich in technisch einfacher Weise eine erhebliche zeitliche Streckung der Ausfällung des amorphen Natriumaluminiumsilikates in der Mischstrecke erreichen und – als unmittelbare Folge dieses Effektes – die Ausbildung eines nicht mehr fliessfähigen Reaktionsgemisches auch ohne Anwendung starker Scherkräfte wirksam verhindern. Bei Anwendung des erfindungsgemässen kontinuierlichen Verfahrens resultiert somit eine gut fliessfähige, homogene Suspension von feinteiligen, kristallisationsfähigen, amorphen Natriumaluminiumsilikat-Partikeln, die zu mindestens 99 Vol.-% kleiner als 50 µm sind.

Hierbei ist zu berücksichtigen, dass die Dosierung der beiden Reaktionspartner insgesamt durch die rechnerische Gesamtzusammensetzung der zu vermischenden Lösungen vorgegeben ist.

Erfindungsgemäss bevorzugt sind Fällungsansätze, bei denen die beiden zu vermischenden Lösungen eine rechnerische Gesamtzusammensetzung bezüglich der Molverhältnisse von

$$1{,}5 \text{ bis } 6\ Na_2O : 1\ Al_2O_3 : 1{,}3 \text{ bis } 2{,}5\ SiO_2 : 40 \text{ bis } 150\ H_2O,$$

insbesondere im Bereich von

$$3 \text{ bis } 5{,}5\ Na_2O : 1\ Al_2O_3 : 1{,}7 \text{ bis } 2{,}0\ SiO_2 : 70 \text{ bis } 110\ H_2O$$

aufweisen. Die amorphen, von überschüssigem Alkali befreiten Produkte weisen dann eine chemische Zusammensetzung entsprechend Molverhältnissen von

$$0{,}9 \text{ bis } 1{,}1\ Na_2O : 1\ Al_2O_3 : 1{,}8 \text{ bis } 2\ SiO_2$$

mit einem vom Trocknungsgrad abhängigen Wassergehalt auf.

Andererseits zeichnen sich die amorphen, noch überschüssiges Alkali enthaltenden Fällungsprodukte dadurch aus, dass sie sich leicht in hochkristalline Natriumaluminiumsilikate unterschiedlichen Typs umwandeln lassen. Bei den vorstehend angegebenen bevorzugten Fällungsansätzen resultieren durch Kristallisation des amorphen Primärproduktes feinstteilige zeolithische Molekularsiebe vom Typ NaA mit Korngrössenanteilen kleiner als 10 µm von über 95 Vol.-% und Nasssiebrückständen grösser oder gleich 50 µm von weniger als 1 Gew.-%. Die chemische Zusammensetzung des Molekularsiebs NaA – einem Natriumaluminiumsilikat, dem besondere technische Bedeutung zukommt, – entspricht der Summenformel

$$1 \pm 0{,}2\ Na_2O \cdot 1\ Al_2O_3 \cdot 2 \pm 0{,}2\ SiO_2 \cdot 0 \text{ bis } 6\ H_2O.$$

Das üblicherweise zur Identifizierung des Molekularsiebs NaA herangezogene Röntgendiffraktogramm ist beispielsweise in den deutschen Auslegeschriften DE-B-1 038 015 und DE-B-1 038 017 angegeben.

Wie vorstehend bereits erläutert, bedingt das Aufteilen einer der beiden Reaktionskomponenten in mindestens drei Teilströme eine wesentliche Viskositätsverringerung des Reaktionsgemisches und damit dessen verbesserte Fliessfähigkeit. Im Sinne des erfindungsgemässen Verfahrens werden mit dem ersten Teilstrom nur 40 bis 60% der zweiten Reaktionskomponenten, bezogen auf das durch die rechnerische Gesamtzusammensetzung vorgegebene Verhältnis der beiden Lösungen, dem Strom der ersten Reaktionskomponenten kontinuierlich zufügt. Zweckmässigerweise wird der Rest der zweiten Reaktionskomponenten dann dem Strom des bereits gebildeten Reaktionsgemisches in zwei bis vier Teilströmen zudosiert, wobei die einzelnen Teilströme stromabwärts jeweils gleiche oder geringere prozentuale Anteile der zweiten Reaktionskomponenten, gleichfalls bezogen auf das durch die rechnerische Gesamtzusammensetzung vorgegebene Verhältnis der beiden Lösungen, umfassen. Eine Aufteilung in mehr als fünf Teilströme erfordert einen grösseren technischen Aufwand hinsichtlich des Dosierens, ohne dass dabei merkliche Verfahrens- oder Produktvorteile resultieren. Bei dem erfindungsgemässen kontinuierlichen Ausfällen von amorphem Natriumaluminiumsilikat ist mithin das Splitten einer der beiden Reaktionskomponenten in drei bis fünf Teilströme bevorzugt.

Prinzipiell kann hierbei jede der beiden Komponenten – d.h. entweder die Aluminatlösung

oder aber die Silikatlösung – in Teilströme gesplittet werden. Erfindungsgemäss bevorzugt ist es jedoch, die Aluminatlösung als zweite Reaktionskomponente in Teilströme aufzuteilen, da diese Verfahrensweise zu besonders feinteiligen Reaktionsprodukten führt.

Hinsichtlich der Fällungstemperatur ist es bei dem erfindungsgemässen Verfahren von Vorteil, dass man das Vermischen der beiden Reaktionskomponenten bei einer, bis auf Abweichungen von $\pm 2\,°C$ konstanten Temperatur, vorzugsweise im Bereich von 50 bis 80 °C, durchführt.

Als stufig wirkende Mischstrecken im Sinne der Erfindung können solche Reaktoren Verwendung finden, die ein kontinuierliches Vermischen der Reaktionspartner entlang eines Reaktionsweges sowie die Zuführung eines der Reaktionspartner in Form von Teilströmen ermöglichen, wobei «stufig wirkend» eine Einschränkung der Vor- bzw. Rückströmung des Reaktionsgemisches in der Mischstrecke charakterisiert. Hinsichtlich der Dimensionierung der Mischstrecke ist ausser dem angestrebten Mengendurchsatz einerseits die gewählte Anzahl von Teilströmen der zweiten Reaktionskomponenten sowie andererseits die für ein optimales Vermischen erforderliche mittlere Verweilzeit der Reaktionspartner innerhalb der gesamten Mischstrecke zu berücksichtigen. Die mittlere Verweilzeit ergibt sich hierbei aus dem Gesamtvolumen der in die Mischstrecke einströmenden Lösungen pro Mischervolumen (unter Berücksichtigung des Totraums) und Stunde.

Im Hinblick auf die Abhängigkeit des Verweilzeitverhaltens der Reaktionspartner, insbesondere der mittleren Verweilzeit, vom sogenannten Stufenwirkungsgrad der verwendeten Mischstrekke sowie auf Zusammenhänge zwischen praktischer und theoretischer Stufenzahl mehrstufiger Mischsysteme wird auf entsprechende Lehrbücher der technischen Chemie verwiesen, beispielsweise «Ullmanns Encyklopädie der technischen Chemie», 4. Auflage, Band 3: «Verfahrenstechnik II und Reaktionsapparate», 1973, Verlag Chemie, Seiten 342 bis 354.

Vorzugsweise lässt man den Gesamtproduktstrom, d.h. den Strom der ersten Reaktionskomponenten einerseits sowie die Teilströme der zweiten Reaktionskomponenten andererseits, insgesamt mit einer Dosiergeschwindigkeit von 3 bis 30 $m^3$ Lösung, vorzugsweise mehr als 4 $m^3$ Lösung, pro Kubikmeter Mischervolumen und Stunde in die Mischstrecke einströmen, wobei die mittlere Verweilzeit der Reaktionspartner in der Mischstrecke 2 bis 20 Minuten, insbesondere weniger als 15 Minuten, beträgt.

Nach einer besonderen Ausführungsform des erfindungsgemässen Verfahrens führt man die einzelnen Teilströme der zweiten Reaktionskomponenten jeweils in unterschiedliche, durch Rohrleitungen miteinander verbundene, mit Rührvorrichtungen versehene Kessel einer Rührkesselkaskade ein, die mindestens so viele Kessel enthält, wie die zweite Reaktionskomponente an Teilströmen aufweist.

Als stufig wirkende Mischstrecke im Sinne der Erfindung findet mithin eine Rührkesselkaskade Verwendung, wobei die einzelnen Kessel der Kaskade die jeweiligen Stufen der Mischstrecke darstellen, in die die gesplitteten Teilströme der zweiten Reaktionskomponenten eindosiert werden.

Die Rührkesselkaskade ist eine Serienschaltung von kontinuierlich betriebenen Idealkesseln. Die Reaktionspartner beziehungsweise deren Gemisch werden laufend eingespeist und das Endgemisch, welches die Reaktionsprodukte und nicht umgesetzte Reaktionspartner enthält, wird kontinuierlich abgezogen. Dabei stellt der Produktstrom des vorangehenden Rührkessels den Zulaufstrom für den folgenden Kessel dar. Für jeden einzelnen Rührkessel gilt dann die Charakteristik des Idealkessels als eines homogenen und stationären Reaktors. Für die Gesamtheit der Rührkesselkaskade ergibt sich ein treppenförmiger Konzentrationsverlauf der Reaktionsteilnehmer.

Angaben zum Aufbau und Betreiben von Idealkesseln und Rührkesselkaskaden einschliesslich deren mathematischer Behandlung lassen sich Lehrbüchern der technischen Chemie entnehmen, beispielsweise der vorstehend zitierten Literaturstelle «Ullmanns Encyklopädie der technischen Chemie».

Das wichtigste Merkmal des idealen Rührkessels ist die Vermischung. Die rechnerische Beschreibung des idealen Rührkessels beruht in erster Linie auf der Annahme vollständiger Vermischung des Kesselinhalts, dass also das Reaktionsgemisch am Kesselausgang und im Rührkessel selbst dieselbe Zusammensetzung aufweist. Zur geforderten vollständigen Vermischung der Reaktionspartner im idealen Rührkessel ist eine gute Rührung Voraussetzung; andernfalls könnte ein Teil der Reaktionsflüssigkeit direkt vom Kesseleingang zum Kesselausgang strömen, und ein grosser Teil des Kesselinhalts wäre lediglich Totvolumen.

Für den realen Fall trifft die Voraussetzung idealer Durchmischung nur näherungsweise zu. Die Mischzeit, in welcher der Inhalt eines Rührkessels homogen durchmischt ist, lässt sich für verschiedene Bedingungen berechnen. Ideale Durchmischung liegt praktisch dann vor, wenn die mittlere Verweilzeit in dem Rührkessel wesentlich grösser ist als die Mischzeit. Erfahrungsgemäss wird ein ideales Verhalten ausreichend angenähert, wenn die mittlere Verweilzeit etwa 5- bis 10mal so gross ist wie die berechnete Mischzeit.

Bei der Auslegung von Rührkesselkaskaden spielen Massstabsfragen keine Rolle, wenn ideales Strömungsverhalten wie oben beschrieben vorliegt. Die in dieser Hinsicht wesentliche Rechengrösse ist die mittlere Verweilzeit, durch welche Reaktoren beliebiger Grösse beschrieben werden. Für den realen Fall ist jedoch bei Massstabsänderungen zu beachten, dass von der Grösse des Kessels sowohl die Mischzeit als auch das Verhältnis von Oberfläche zu Volumen des Kessels abhängen. Dieses Verhältnis hat entscheidenden Einfluss auf den Wärmezu- und -abfluss, da die durch die Kesselwand zu transportierende Wärmemenge der Kesseloberfläche proportional ist, die Reaktionswärme jedoch dem genutzten Kesselvolumen. Bei der Auslegung von Rührkesselkaskaden ist also jeweils zu prüfen, ob die Mischzeit wie oben gefordert jeweils sehr klein ist gegenüber der mittleren Verweilzeit.

Die Optimierung einer Rührkesselkaskade ist nach verschiedenen Gesichtspunkten möglich. Aus verfahrenstechnischer Sicht ist meist von Bedeutung, in welchem Verhältnis die Volumina der einzelnen Kessel zueinander stehen müssen, damit entweder die Kaskade bei gegebenem Umsatz das kleinste Gesamtvolumen hat bzw. damit in einer Kaskade von gegebenem Gesamtvolumen der grösste Umsatz erreicht wird. Für die meisten chemischen Reaktionen müssen im Hinblick auf die zugehörigen Geschwindigkeitsgesetze alle Rührkessel das gleiche Volumen haben. Aus Gründen der Standardisierung werden für Reaktionen beliebiger Ordnung Rührkesselkaskaden mit einheitlichen Kesseln bevorzugt. Weitere Optimierungsmöglichkeiten ergeben sich aus Wirtschaftlichkeitserwägungen und aus Überlegungen zur optimalen Reaktionsführung. Aus Kostengründen sind Rührkesselkaskaden mit mehr als etwa 5 Stufen unvorteilhaft.

Erfindungsgemäss werden der Gesamtstrom der ersten Reaktionskomponenten sowie der erste Teilstrom der zweiten Reaktionskomponenten gleichzeitig kontinuierlich in den vordersten Kessel der Kaskade mit Hilfe entsprechender Dosiereinrichtungen eingeführt. In die stromabwärts daran anschliessenden Kessel wird dann jeweils ein weiterer Teilstrom der zweiten Reaktionskomponenten eingespeist. Von Vorteil ist es dabei, so zu rühren, dass die Mischzeit maximal 1/5, möglichst jedoch 1/10 der mittleren Verweilzeit beträgt. Mischzeiten und mittlere Verweilzeiten lassen sich beispielsweise gemäss der vorstehend zitierten Literaturstelle bestimmen. Die verwendete Rührkesselkaskade sollte mindestens soviel Rührkessel enthalten, wie die gesplittete Komponente an Teilströmen aufweist, bevorzugt jedoch eine (aus Gründen der Wirtschaftlichkeit maximal um 2) höhere Zahl an Kesseln. So verbleibt nach vollständiger Zudosierung der beiden Komponenten noch eine genügend lange Mischstrecke und die Suspension wird besonders homogen und feinteilig.

Nach einer weiteren besonderen Ausführungsform des erfindungsgemässen Verfahrens führt man die einzelnen Teilströme der zweiten Reaktionskomponenten jeweils in unterschiedliche, durch Trennvorrichtungen abgeteilte, mit Rührvorrichtungen versehene Kammern einer horizontal gelagerten Mischstrecke ein, die in mindestens so viele Kammern unterteilt ist, wie die zweite Reaktionskomponente an Teilströmen aufweist.

Als derartige stufig ausgeführte Mischstrecke kann insbesondere ein Differentialschnecken-Mischer mit abgeteilten Kammern Verwendung finden, der die Zuführung mehrerer Teilströme stromabwärts erlaubt.

Differentialschnecken-Mischer sind horizontal gelagerte Trogmischer, die nach dem Prinzip gegenläufiger Schnecken arbeiten. Diese gegenläufigen Schnecken sind als Förder- und Rückwurfschaufeln auf der gleichen Welle befestigt und bewirken durch gegenläufiges Arbeiten eine äusserst intensive Durchmischung der Reaktionskomponenten. Die Förderdifferenz beider Schaufelsysteme entspricht der Mischleistung in der Zeiteinheit. Die einstellbaren Schaufelwinkel ermöglichen es hierbei, die Verweilzeit des Mischgutes im Mischer in gewissem Umfang zu beeinflussen. Das zu mischende Produkt wird mithin nicht nur in der Förderrichtung bewegt, sondern gleichzeitig in kleinen Impulsen wieder zurückgeworfen. Verbunden mit einer starken Turbulenz und einer fortwährenden Stromteilung beschreibt das Mischgut somit eine «Pilgerschrittbewegung» – d. h. eine vor- und rückläufige Bewegung, bei der jedoch insgesamt die vorläufige Bewegung überwiegt – und wird in kurzer Zeit äusserst gut durchmischt.

Für das erfindungsgemässe Verfahren – im Sinne der vorstehend beschriebenen besonderen Ausführungsform – ist nun ein derartiger Differentialschnecken-Mischer, der zusätzlich stufig ausgeführt bzw. ausgerüstet ist, insbesondere geeignet. Dies bedeutet, dass der Mischraum durch Einbau von Trennblechen mit Überlauf oder ähnlichen Vorrichtungen in einzelne Kammern unterteilt ist. Auf diese Weise wird unterbunden, dass das Mischgut in einem zu starken Masse entgegen der Stromrichtung rückgeführt wird, da ansonsten der durch das Splitten einer der Reaktionskomponenten bewirkte Effekt zumindest teilweise wieder aufgehoben würde.

Erfindungsgemäss werden der Gesamtstrom der ersten Reaktionskomponenten sowie der erste Teilstrom der zweiten Reaktionskomponenten gleichzeitig kontinuierlich in die vorderste der an einem Ende des Mischers befindliche Kammer mit Hilfe entsprechender Dosiereinrichtungen eingeführt. In die stromabwärts daran anschliessenden Kammern wird dann jeweils ein weiterer Teilstrom der zweiten Reaktionskomponenten eingespeist, wobei gewünschtenfalls auch einzelne Kammern übersprungen werden können.

Der verwendete Differentialschnecken-Mischer sollte in mindestens so viele Kammern eingeteilt sein, wie die gesplittete Komponente an Teilströmen aufweist; vorzugsweise jedoch in eine grössere, möglichst die doppelte Anzahl an Kammern. Somit verbleibt nach vollständigem Zudosieren der beiden Reaktionskomponenten in den Mischer noch eine genügend lange Mischstrecke, um eine besonders homogene Suspension feinteiliger Fällungsprodukte zu erhalten. Auf diese Weise lässt sich die Mischwirkung des Mischers maximal nutzen. Länge und Geometrie des Differentialschnecken-Mischers werden letztlich von der Anordnung, Anzahl und Grösse der Kammern bestimmt. Die einzelnen Kammern können die gleiche, jedoch auch eine voneinander abweichende Grösse aufweisen. Dabei sollte die Länge der Kammern mindestens 30 cm betragen, um

einerseits die Zuführung des jeweiligen Teilstroms in technisch möglichst einfacher Weise zu ermöglichen und andererseits eine mittlere Verweilzeit der Reaktionspartner von mindestens 5 Sekunden vor der Zudosierung des nächsten Teilstroms zu gewährleisten.

Im Hinblick auf die intensive Mischwirkung des stufig ausgeführten Differentialschnecken-Mischers und die angegebene mittlere Verweilzeit der Reaktionspartner im Mischer kann die Rührgeschwindigkeit auf unter 200 Umdrehungen pro Minute, gegebenenfalls sogar auf unter 100 Umdrehungen pro Minute beschränkt werden. Durch diese relativ niedrige Rührerdrehzahl werden die aus Lagerung und Dichtung der Rührerwelle resultierenden Probleme wesentlich vereinfacht.

Nach einer dritten bevorzugten Ausführungsform des erfindungsgemässen Verfahrens führt man die einzelnen Teilströme der zweiten Reaktionskomponenten jeweils in unterschiedliche, durch Zwischenböden abgeteilte Kammern einer vorzugsweise vertikal angeordneten Rührkolonne ein, die mindestens vier Zwischenböden aufweist.

Als stufig ausgeführte Mischstrecke im Sinne der Erfindung findet mithin eine Rührkolonne Verwendung, die die Zuführung der gesplitteten Teilströme der zweiten Reaktionskomponenten in einzelne Kammern, d.h. Stufen der Kolonne, erlaubt.

Rührkolonnen bestehen aus einem zylindrischen Reaktor, der durch Zwischenwände in Kammern bevorzugt gleicher Grösse unterteilt ist. Dieser Reaktortyp wird daher in der Literatur gelegentlich auch als «Kammerreaktor» bezeichnet. Analog zu Destillationskolonnen werden bei Rührkolonnen die Zwischenwände auch «Böden» genannt. Gleichermassen analog ist auch die Stufenzahl definiert als Produkt von (praktischer) Bodenzahl und Stufenwirkungsgrad (siehe Lehrbücher der technischen Chemie).

Der Abstand der Böden, also die Höhe der Kammern, liegt bei technisch gängigen Rührkolonnen hoher Bodenzahl im Bereich des 0,35- bis 0,5fachen des Reaktordurchmessers.

Die Rührer für die einzelnen Kammern sind gemeinsam auf einer Welle in der Rohrachse befestigt. Die Lager befinden sich normalerweise an den Enden; nur bei besonders langen Rührerwellen ist eine Zwischenlagerung technisch sinnvoll. Die Auslegung der Rührer bezüglich Rührertyp, Rührergrösse, Leistungsbedarf, Strombrecher u.dgl. kann sehr unterschiedlich sein. Die Berechnung der mittleren Verweilzeit, Verweilzeitverteilung und Konzentration der Reaktanden in einer Rührkolonne ist identisch mit derjenigen für eine Rührkesselkaskade gleicher Stufenzahl; mit einer Rührkolonne lassen sich jedoch mit geringerem wirtschaftlichem Aufwand höhere Stufenzahlen realisieren. Die Flüssigkeit tritt in Rührkolonnen von Kammer zu Kammer durch Aussparungen in den Böden über. Rührkolonnen können mit beliebiger Orientierung im Raum, also stehend, waagrecht oder schräg liegend betrieben werden. Bevorzugt werden sie jedoch stehend, geflutet mit von unten nach oben steigender Flüssigkeit gefahren. Einzelheiten und besondere Ausführungsformen sind Lehrbüchern der technischen Chemie zu entnehmen, beispielsweise der vorstehend zitierten Literaturstelle «Ullmanns Encyklopädie der technischen Chemie».

Erfindungsgemäss werden der Gesamtstrom der ersten Reaktionskomponenten sowie der erste Teilstrom der zweiten Reaktionskomponenten gleichzeitig kontinuierlich in die unterste Kammer am Boden der senkrecht stehenden Kolonne mit Hilfe entsprechender Dosiereinrichtungen eingeführt. In die darüber liegenden Kammern, d.h. stromabwärts bei aufsteigender Strömungsrichtung in der Kolonne, wird dann jeweils ein weiterer Teilstrom der zweiten Reaktionskomponenten eingespeist. Bei dieser Zudosierung der gesplitteten Komponente können auch einzelne Kammern übersprungen werden, um zunächst einen optimalen Vermischungsgrad der bereits vereinigten Reaktionskomponenten zu erzielen.

Die verwendete Rührkolonne sollte mindestens vier, vorzugsweise jedoch eine grössere Anzahl von Zwischenböden aufweisen. Im Hinblick auf die – wie vorstehend erörtert – erwünschte mittlere Verweilzeit der Reaktionspartner in der Kolonne, kann die Rührerumfangsgeschwindigkeit auf unter 6 Meter pro Sekunde, gegebenenfalls sogar auf unter 4 Meter pro Sekunde, je nach Rührertyp, beschränkt werden.

Die jeweils verwendete Mischstrecke kann ganz oder teilweise mit einem Heizmantel für Wasserdampf, Heisswasser oder anderen gebräuchlichen Wärmeübertragungsmedien umgeben sein. Die kontinuierliche Fällung lässt sich so weitgehend isotherm, d.h. mit einer Toleranz von $\pm 2\,°C$, ausführen und Wärmeabstrahlungen können ausgeglichen werden. Gegebenenfalls kann auch der Bereich des Mischerausflusses eine zusätzliche Ummantelung aufweisen, um entweder das Fällungsprodukt abzukühlen oder aber von der Fällungstemperatur auf die erforderliche Kristallisationstemperatur aufzuheizen.

Das erfindungsgemäss kontinuierlich hergestellte amorphe Natriumaluminiumsilikat kann durch Erwärmen auf eine Temperatur von beispielsweise 85 °C zu feinstteiligem Molekularsieb vom Typ NaA kristallisiert werden. Der zur Kristallisation erforderliche Zeitaufwand ist dabei nur sehr gering. Einzelheiten über die Durchführung der Kristallisation sowie über die Eigenschaften der kristallinen Produkte sind in den nachstehenden Beispielen angegeben. Bei Verzicht auf eine anschliessende Kristallisation des amorphen Reaktionsproduktes wird dieses direkt aufgearbeitet. Zur Aufarbeitung sowohl der amorphen als auch der kristallinen Produkte werden diese zunächst von der Mutterlauge abfiltriert, je nach den anwendungstechnischen Erfordernissen gewaschen und getrocknet oder gewünschtenfalls in sonstiger gebräuchlicher Weise konfektioniert. Mutterlauge und Waschwässer können in den Prozess zurückgeführt werden.

Die gewonnenen Natriumaluminiumsilikate – insbesondere das Molekularsieb NaA – können vorzugsweise als heterogene anorganische Builderstoffe (Phosphatersatz) in Wasch-, Spül- und Reinigungsmitteln Verwendung finden.

In den nachfolgenden Beispielen wird die Durchführung des erfindungsgemässen Verfahrens näher erläutert.

Beispiele

In den nachstehenden Beispielen wird als stufig wirkende Mischstrecke sowohl ein Differentialschnecken-Mischer (Beispiel 1 und 2), eine Rührkesselkaskade (Beispiel 3 und 4) als auch eine Rührkolonne (Beispiel 5 und 6) verwendet. Angaben, die für alle Beispiele gleichermassen gelten, sind nachstehend zusammenfassend wiedergegeben.

Die Aluminatlösungen wurden aus feuchtem Hydrargillit mit 58% $Al_2O_3$ oder aus technischem Natriummetaaluminat (95%ig, 54% $Al_2O_3$ und 41% $Na_2O$) unter Zusatz von technischer 50%iger Natronlauge und entionisiertem Wasser zubereitet, die Silikatkomponente aus technischer Wasserglaslösung (8% $Na_2O$, 26,9% $SiO_2$), technischer 50%iger Natronlauge sowie rückgeführter Mutterlauge. Die Aluminat- und Silikatlösungen wurden vor ihrem Einsatz filtriert, die Konzentrationen an Alkali, Aluminat bzw. Silikat analytisch bestimmt.

Aus dem kontinuierlich abfliessenden Produktstrom wurden Proben entnommen und zum Nachweis der Kristallisationsfähigkeit des erhaltenen amorphen Natriumaluminiumsilikats gesondert labormässig kristallisiert. Hierzu wurden jeweils 1,500 g der gewonnen Suspension in einem 2-Liter-Dreihalskolben mit Heizpilz, Kontaktthermometer, aufgesetztem Rückflusskühler und Rührer bei 85 °C gerührt. Nach beendeter Kristallisation wurde der Feststoff abfiltriert und so lange mit 60 °C heissem entionisiertem Wasser gewaschen, bis das Waschwasser nur noch eine Restalkalität entsprechend pH 9 bis 10 aufwies.

Zur Charakterisierung wurden die gewaschenen Produkte über Nacht im Vakuumtrockenschrank bei 100 °C getrocknet, gut verrieben und mittels ihres Röntgendiagramms identifiziert. Die Zusammensetzung bezüglich $Na_2O$, $SiO_2$ und $Al_2O_3$ wurde röntgenfluoreszenzanalytisch bestimmt. Als Wassergehalt ist der Glühverlust nach einer Stunde bei 800 °C angegeben. Der Kristallhabitus wurde rasterelektronenmikroskopisch bestimmt, die Korngrössenverteilung mittels Coulter Counter[R] gemessen, der Nasssiebrückstand nach MOCKER unter Verwendung eines 25 µm-Siebes gemäss DIN 53580 (1 g Aktivsubstanz in 100 ml entionisiertem Wasser aufgeschlämmt, 1 Minute im Ultraschallbad homogenisiert, 5 Minuten Nasssiebung mit Wasserdruck von 4 bar und einer Strömungsgeschwindigkeit von 400 l Wasser pro Stunde; Rückwägung der getrockneten Siebe) ermittelt.

Das Calciumbindevermögen (= «CaBv») der getrockneten Produkte wurde entsprechend DE-OS 2 412 837 (Seite 27) bei 22 ± 2 °C mit 1 g Aktivsubstanz pro Liter und 30° d (Deutsche Härte) Ausgangshärte nach 10 Minuten ermittelt und entsprechend als «mg CaO/g AS» (AS = Aktivsubstanz) angegeben.

Beispiele 1 und 2

Zur Durchführung der nachstehenden Beispiele wurde der in den Abbildungen 1 und 2 in verschiedenen Ansichten vereinfacht abgebildete Differentialschnecken-Mischer verwendet.

Abbildung 1 zeigt eine Seitenansicht (a) sowie eine Aufsicht (b) des Differentialschnecken-Mischers; die Zahlen 1 bis 4 in Abbildung 1 kennzeichnen die ersten vier Kammern des Mischers, in die die Reaktionskomponenten eindosiert werden. Abbildung 2 zeigt zwei Querschnittszeichnungen des Mischers; hierin bedeuten: 5 = Deckel, 6 = Überlaufblech, 7 = Rührerwelle, 8 = kleine Schaufel, 9 = axialer Ringspalt, 10 = grosse Schaufel.

Bei dem verwendeten Differentialschnecken-Mischer handelt es sich um eine Doppeltrogausführung, bei der die Mischwerkzeuge in zwei getrennten, nebeneinanderliegenden Trögen arbeiten. Durch diese kompakte Anordnung ist gegenüber Eintrogausführungen ein verringerter Raumbedarf erforderlich. Der Mischer wies eine Länge von 200 cm, eine Breite von 52 cm und eine Höhe von 35 cm auf. Der Rührerdurchmesser betrug 24 cm. Beide Tröge wurden durch 25 cm hohe Trennbleche in jeweils 5 etwa gleich grosse Kammern unterteilt. Pro Kammer waren an der Rührwelle jeweils 12 Schaufeln angebracht, von denen vier Schaufelreihen förderneutral eingestellt waren und nur der Durchmischung dienten. Die anderen Rührelemente förderten die Flüssigkeit. Der Weitertransport erfolgte als Überlauf über die Trennbleche 6 und durch den axialen Ringspalt im Rührerwellenbereich 9. Bei Übertritt des Mischguts vom ersten Mischtrog in den parallel liegenden zweiten änderte sich die Strömungsrichtung um 180°. Auf diese beiden Mischtröge waren zwei getrennte Deckel 5 aufgesetzt, in denen sich auch die Zuläufe für die Komponenten befanden. Die Drehrichtung der Rührerwellen ist in den Abbildungen 1a und 1b eingezeichnet. Die Rührerdrehzahl konnte stufenlos im Bereich von 120 bis 220 Umdrehungen pro Minute geregelt werden. Das nutzbare Gesamtvolumen des Differentialschnekken-Mischers betrug ca. 180 l.

Die Komponenten wurden aus grossen Vorlagebehältern nach Aufheizen auf Fällungstemperatur über gesondert geeichte Dosiergeräte (Schwebekörperdurchflussmessgeräte) direkt in den Differentialschnecken-Mischer gepumpt. Die Versuchsanordnung, die für die Aufteilung einer der beiden Komponenten in bis zu 4 Teilströmen geeignet ist, lässt sich aus dem vereinfachten Fliessschema gemäss Abbildung 3 entnehmen.

Hierin bedeuten: 11 = Vorratsbehälter für die nicht gesplittete Komponente, 12 = Vorratsbehälter für die zu splittende Komponente, 13 = Dosiereinrichtungen für die zu splittende Komponente, 14 = Dosiereinrichtung für die nicht gesplittete Komponente, 15 = Teilstrom 1, 16 = Teilstrom 2, 17 = Teilstrom 3, 18 = Teilstrom 4, 19 = Differentialschnecken-Mischer, 20 = Mischerauslauf, 21 = Rührer.

Beispiele 1a–1k

In diesen Beispielen wurden unter Beibehaltung der übrigen Fällungsbedingungen nur die Konzentrationen und Dosierungen der eingesetzten Natriumaluminat- und Natriumsilikat-Lösungen variiert. Die Fällungen wurden in dem beschriebenen Mischer bei konstanter Drehzahl des Rührers von 120 Umdrehungen pro Minute durchgeführt. Die Lösungen wurden vor dem Dosieren auf 65 °C aufgeheizt; mittels der Mantelheizung wurde der Mischer ebenfalls auf konstant 65 °C temperiert. Die Aluminatlösungen wurden aus feuchtem Hydrargillit hergestellt.

Die Silikatlösung wurde (ohne Aufspaltung in Teilströme) mit den in Tabelle 1 angegebenen Konzentrationen und Dosierungen kontinuierlich jeweils in die Kammer 1 des Mischers gepumpt. Die Aluminatlösung wurde jeweils in vier Teilströme aufgesplittet: ein Strom mit 50% der nach Tabelle 1 erforderlichen Gesamtdosierung wurde kontinuierlich in die Kammer 1 geleitet, ein Strom von 30% der Gesamtdosierung in die Kammer 2 und zwei Ströme von je 10% der Gesamtdosierung in die Kammern 3 und 4 des Mischers.

Das den Mischer kontinuierlich verlassende amorphe Reaktionsgemisch wies eine Temperatur von 65–67 °C auf und war stets homogen und gut fliessfähig. Die Kornanteile grösser als 50 µm lagen unterhalb 1 Gew.-%.

Die daraus nach 40 Minuten Kristallisation erhaltenen Produkte wurden in allen Fällen als hochkristallines, noch gebundenes Wasser enthaltendes Molekularsieb NaA mit einer chemischen Zusammensetzung entsprechend Molverhältnissen von

$$1{,}0\ Na_2O : 1{,}0\ Al_2O_3 : 1{,}8\text{–}2{,}0\ SiO_2$$

identifiziert.

Das CaBv lag oberhalb 160 mg CaO/g Aktivsubstanz. Alle Produkte wiesen eine mittlere Teilchengrösse unterhalb 7 µm bei Korngrössenanteilen kleiner als 10 µm von über 95 Vol.-% auf. Der Nasssiebrückstand nach MOCKER betrug weniger als 1 Gew.-%.

In der nachfolgenden Tabelle bedeuten:

a) = kg/Stunde
b) = bezogen auf $Al_2O_3 = 1{,}0$
c) = mittlere Teilchengrösse in µm

Tabelle 1:
Beispiele mit unterschiedlichen Gesamtmolverhältnissen im Fällansatz unter Variation des Gesamtdurchsatzes (Fällung bei 65 °C, Rührerdrehzahl 120 Umdrehungen pro Minute, Splitting der Aluminatkomponente jeweils entsprechend 50% + 30% + 10% + 10%)

| Beispiel Nr. | Aluminatlösung %$Al_2O_3$ | Aluminatlösung %$Na_2O$ | Aluminatlösung Dosierung a) | Silikatlösung %$SiO_2$ | Silikatlösung %$Na_2O$ | Silikatlösung Dosierung a) | Gesamtmolverhältnisse im Fällansatz b) $Na_2O$ | $SiO_2$ | $H_2O$ | Gesamtdurchsatz a) | d c) |
|---|---|---|---|---|---|---|---|---|---|---|---|
| 1a | 12,92 | 14,06 | 790 | 12,35 | 7,85 | 631 | 2,6 | 1,3 | 60 | 1421 | 6,0 |
| 1b | 12,92 | 14,06 | 395 | 12,35 | 7,85 | 316 | 2,6 | 1,3 | 60 | 711 | 6,5 |
| 1c | 12,92 | 14,06 | 790 | 13,11 | 12,19 | 916 | 3,6 | 2,0 | 70 | 1706 | 5,1 |
| 1d | 12,92 | 14,06 | 395 | 13,11 | 12,19 | 459 | 3,6 | 2,0 | 70 | 854 | 5,8 |
| 1e | 12,43 | 17,38 | 819 | 10,26 | 7,66 | 1050 | 3,6 | 1,8 | 80 | 1869 | 5,0 |
| 1f | 12,43 | 17,38 | 273 | 10,26 | 7,66 | 350 | 3,6 | 1,8 | 80 | 623 | 5,3 |
| 1g | 10,12 | 18,45 | 504 | 6,36 | 8,77 | 849 | 5,4 | 1,8 | 120 | 1353 | 4,5 |
| 1h | 12,43 | 17,38 | 821 | 16,17 | 8,36 | 668 | 3,2 | 1,8 | 60 | 1489 | 5,8 |
| 1i | 10,12 | 18,45 | 1008 | 8,47 | 6,81 | 1275 | 4,4 | 1,8 | 100 | 2283 | 4,3 |
| 1k | 10,12 | 18,45 | 336 | 8,47 | 6,81 | 425 | 4,4 | 1,8 | 100 | 761 | 4,7 |

Beispiele 2a–2k

In diesen Beispielen wurden die Ansatz- und Konzentrationsverhältnisse während der Fällung konstant gehalten, dagegen die Aufteilung einer der beiden Komponenten in Teilströme, die Rührerdrehzahl sowie die Temperaturführung variiert. Die Aluminatlösung und die Silikatlösung wurden entsprechend Beispiel 1e dosiert, also mit insgesamt 819 kg Aluminatlösung (12,43% $Al_2O_3$ und 17,38% $Na_2O$) pro Stunde sowie insgesamt 1050 kg Silikatlösung (10,26% $SiO_2$ und 7,66% $Na_2O$) pro Stunde; daraus resultierte ein Gesamtmolverhältnis im Fällansatz von

$$3{,}6\ Na_2O : 1{,}0\ Al_2O_3 : 1{,}8\ SiO_2 : 80\ H_2O.$$

Die Aluminatlösung wurde aus technischem Natriummetaaluminat hergestellt.

Das Splitting der Komponenten (Aluminatlösung oder Silikatlösung) in unterschiedlich grosse Teilströme, die Einstellung der Rührerdrehzahl sowie die Temperatur der Komponenten kann den Angaben in Tabelle 2 entnommen werden.

Das den Mischer kontinuierlich verlassende amorphe Reaktionsgemisch wies eine Temperatur entsprechend der Fälltemperatur auf und war stets homogen und gut fliessfähig. Die Kornanteile grösser als 50 µm lagen unterhalb 1 Gew.-%.

Die nach 40 Minuten Kristallisation erhaltenen Produkte wurden in allen Fällen als hochkristallines, nicht gebundenes Wasser enthaltendes Molekularsieb NaA mit einer chemischen Zusammensetzung entsprechend Molverhältnissen von

$$1{,}0\ Na_2O \cdot 1{,}0\ Al_2O_3 \cdot 1{,}8\ SiO_2$$

identifiziert. Das Calciumbindevermögen lag bei oder oberhalb 150 mg CaO/g AS. Alle Produkte wiesen eine mittlere Teilchengrösse von unterhalb 7 µm bei Korngrössenanteilen kleiner als 10 µm von über 95 Vol.-% auf. Der Nasssiebrückstand nach MOCKER betrug weniger als 1 Gew.-%.

Die würfelförmigen Kristallite wiesen überwiegend abgerundete Kanten und eine Kantenlänge von 0,5 bis 3 µm auf.

In der nachfolgenden Tabelle bedeuten:

a) = Umdrehungen pro Minute
b) = mittlere Teilchengrösse in µm gemäss Coulter Counter
c) = Calciumbindevermögen nach 40 Minuten Kristallisation bei 85 °C.

Tabelle 2:
Beispiele mit unterschiedlichem Splitting der Komponenten unter Variation von Rührerdrehzahl und Fälltemperatur (Dosierung und Molverhältnisse im Gesamtansatz entsprechend Beispiel 1e, vergleiche Tabelle 1)

| Beispiel Nr. | Splitting der Aluminatlösung in %-Anteilen | Splitting der Silikatlösung in %-Anteilen | Rührerdrehzahl a) | Fällungstemperatur | d b) | CaBv c) |
|---|---|---|---|---|---|---|
| 1e | 50+30+10+10 | ungesplittet | 120 | 65 °C | 5,0 | 168 |
| 2a | 60+20+20 | | | | 5,2 | 163 |
| 2b | 50+30+20 | ungesplittet | 120 | 65 °C | 5,1 | 160 |
| 2c | 40+40+20 | | | | 5,3 | 161 |
| 2d | 60+20+10+10 | | | | 5,0 | 158 |
| 2e | 40+30+20+10 | | | | 5,0 | 157 |
| 2f | 50+30+10+10 | | 220 | 65 °C | 6,8 | 150 |
| 2g | 50+30+10+10 | | 120 | 80 °C | 4,7 | 150 |
| 2h | | 50+30+10+10 | | 65 °C | 6,2 | 152 |
| 2i | ungesplittet | 40+30+20+10 | 120 | 65 °C | 5,8 | 150 |
| 2k | | 40+40+20 | | 50 °C | 5,8 | 153 |

Beispiele 3 und 4

Zur Durchführung der nachstehenden Beispiele wurde eine Rührkesselkaskade mit fünf Rührkesseln, deren Anordnung in Abbildung 4 vereinfacht wiedergegeben ist, verwendet.

Die Rührkessel waren mit Mantelheizung und gleichen Rührsystemen ausgestattet, wiesen gleiche Gestalt und Grösse (30 cm Durchmesser, Höhe etwa 60 cm) auf und hatten ein nutzbares Reaktorvolumen (bis Überlauf) von jeweils etwa 40 l. Die zu splittende Komponente wurde im Behälter 12, die nicht zu splittende Komponente im Behälter 11 vorgelegt und auf die angegebene Temperatur aufgeheizt. Die Dosierung der Teilströme sowie des ungesplitteten Hauptstroms erfolgte über gesondert geeichte Dosiergeräte 13 und 14 (Schwebekörperdurchflussmessgeräte).

Für die Durchmischung des Reaktionsgemisches in den Kesseln 22 bis 26 wurden standardisierte Rührer 27 mit Strombrechern verwendet. Die Rührerdrehzahlen wurden entsprechend den in den Beispielen angegebenen Umfangsgeschwindigkeiten eingestellt.

Beispiele 3a–3k

In diesen Beispielen wurden unter Beibehaltung der übrigen Fällungsbedingungen nur die Konzentrationen und Dosierungen der eingesetzten Natriumaluminat- und Natriumsilikat-Lösungen variiert. Die Fällungen wurden in der beschriebenen Kaskade bei konstanter Drehzahl der Rührer entsprechend einer Umfangsgeschwindigkeit von 6 Metern pro Sekunde durchgeführt. Die Lösungen wurden vor der Dosierung auf 65 °C aufgeheizt; mittels Mantelheizung wurden die Kessel der Kaskade ebenfalls auf konstant 65 °C temperiert. Die Aluminatlösungen wurden aus feuchtem Hydrargillit hergestellt.

Die Silikatlösung wurde (ohne Aufspaltung in Teilströme) mit den in Tabelle 3 angegebenen Konzentrationen und Dosierungen kontinuierlich jeweils in den Kessel 22 der Kaskade gepumpt. Die Aluminatlösung wurde jeweils in vier Teilströme aufgesplittet: ein Strom mit 50% der nach Tabelle 3 erforderlichen Gesamtmenge wurde kontinuierlich in den Kessel 22 geleitet, ein Strom von 30% der Gesamtmenge in den Kessel 23 und zwei Ströme von je 10% der Gesamtmenge in die Kessel 24 und 25 der Kaskade. Kessel 26 der Kaskade diente zur zusätzlichen Vermischung und als Verweilzeitbehälter.

Das die Kaskade hinter Kessel 26 kontinuierlich verlassende amorphe Reaktionsgemisch wies eine Temperatur von 65–67 °C auf und war stets homogen und gut fliessfähig. Die Kornanteile grösser als 50 µm lagen unterhalb 1 Gew.-%. Die daraus nach 40 Minuten Kristallisation erhaltenen Produkte wurden in allen Fällen als hochkristalline, noch gebundenes Wasser enthaltendes Molekularsieb NaA mit einer chemischen Zusammensetzung entsprechend Molverhältnissen von 1,0 $Na_2O$:1,0 $Al_2O_3$:1,8–2,0 $SiO_2$ identifiziert. Das CaBv lag oberhalb 160 mg CaO/g Aktivsubstanz. Alle Produkte wiesen eine mittlere Teilchengrösse unterhalb 7 µm bei Korngrössenanteilen kleiner als 10 µm von über 95 Vol.-% auf. Der Nasssiebrückstand nach MOCKER betrug weniger als 1 Gew.-%.

In der nachfolgenden Tabelle bedeuten:
a) = kg/Stunde
b) = bezogen auf $Al_2O_3$ = 1,0
c) = mittlere Teilchengrösse in µm

Tabelle 3:
Beispiele mit unterschiedlichen Gesamtmolverhältnissen im Fällansatz unter Variation des Gesamtdurchsatzes (Fällung bei 65 °C, Rührerumfangsgeschwindigkeit 6 m/Sekunde, Splitting der Aluminatkomponente jeweils entsprechend 50% + 30% + 10% + 10%)

| Beispiel Nr. | Aluminatlösung %$Al_2O_3$ | %$Na_2O$ | Dosierung a) | Silikatlösung %$SiO_2$ | %$Na_2O$ | Dosierung a) | Gesamtmolverhältnisse im Fällansatz b) $Na_2O$ | : $SiO_2$ | : $H_2O$ | Gesamtdurchsatz a) | d c) |
|---|---|---|---|---|---|---|---|---|---|---|---|
| 3a<br>3b | 12,92 | 14,06 | 1185<br>1422 | 12,35 | 7,85 | 947<br>1138 | 2,6 | 1,3 | 60 | 2132<br>2560 | 6,1<br>6,4 |
| 3c<br>3d | 12,92 | 14,06 | 790<br>1185 | 13,11 | 12,19 | 916<br>1375 | 3,6 | 2,0 | 70 | 1706<br>2560 | 6,1<br>5,8 |
| 3e<br>3f | 12,43 | 17,38 | 819<br>1092 | 10,26 | 7,66 | 1050<br>1400 | 3,6 | 1,8 | 80 | 1869<br>2492 | 5,0<br>5,4 |
| 3g | 10,12 | 18,45 | 1008 | 6,36 | 8,77 | 1698 | 5,4 | 1,8 | 120 | 2706 | 4,3 |
| 3h | 12,43 | 17,38 | 1232 | 16,17 | 8,36 | 1002 | 3,2 | 1,8 | 60 | 2234 | 6,3 |
| 3i<br>3k | 10,12 | 18,45 | 1176<br>672 | 8,47 | 6,81 | 1488<br>850 | 4,4 | 1,8 | 100 | 2664<br>1522 | 4,5<br>4,9 |

Beispiele 4a–4k

In diesen Beispielen wurden die Ansatz- und Konzentrationsverhältnisse während der Fällung konstant gehalten, dagegen die Aufteilung einer der beiden Komponenten in Teilströme, die Rührerdrehzahl sowie die Temperaturführung variiert. Die Aluminatlösung und die Silikatlösung wurden entsprechend Beispiel 3e dosiert, also mit insgesamt 819 kg Aluminatlösung (12,43% $Al_2O_3$ und 17,38% $Na_2O$) pro Stunde sowie insgesamt 1050 kg Silikatlösung (10,26% $SiO_2$ und 7,66% $Na_2O$) pro Stunde; daraus resultierte ein Gesamtmolverhältnis im Fällansatz von 3,6 $Na_2O$:1,0 $Al_2O_3$:1,8 $SiO_2$:80 $H_2O$. Die Aluminatlösung wurde aus technischem Natriummetaaluminat hergestellt.

Das Splitting der Komponenten (Aluminatlösung oder Silikatlösung) in unterschiedlich grosse Teilströme, die Einstellung der Rührerdrehzahl sowie die Temperatur der Komponenten kann den Angaben in Tabelle 4 entnommen werden. Bei Splitting einer der beiden Komponenten in nur 3 Teilströme (Beispiele 4a bis 4c sowie 4k) wurde Kessel 26 der Kaskade nicht benutzt und das Reaktionsgemisch bereits hinter Kessel 25 abgenommen. Das die Kaskade kontinuierlich verlassende amorphe Reaktionsgemisch wies eine Temperatur entsprechend der Fälltemperatur auf und war stets homogen und gut fliessfähig. Die Kornanteile grösser als 50 µm lagen unterhalb 1 Gew.-%.

Die nach 40 Minuten Kristallisation erhaltenen Produkte wurden in allen Fällen als hochkristallines, nicht gebundenes Wasser enthaltendes Molekularsieb NaA mit einer chemischen Zusammensetzung entsprechend Molverhältnissen von 1,0 $Na_2O$·1,0 $Al_2O_3$·1,8 $SiO_2$ identifiziert.

Das Calciumbindevermögen lag bei oder oberhalb 150 mg CaO/g AS. Alle Produkte wiesen eine mittlere Teilchengrösse von unterhalb 7 µm bei Korngrössenanteilen kleiner als 10 µm von über 95 Vol.-% auf. Der Nasssiebrückstand nach MOKKER betrug weniger als 1 Gew.-%.

Die würfelförmigen Kristallite wiesen überwiegend abgerundete Kanten und eine Kantenlänge von 0,5 bis 3 µm auf.

In der nachfolgenden Tabelle bedeuten:
a) = Meter pro Sekunde
b) = mittlere Teilchengrösse in µm gemäss Coulter Counter
c) = Calciumbindevermögen nach 40 Minuten Kristallisation bei 85 °C

Tabelle 4:
Beispiele mit unterschiedlichem Splitting der Komponenten unter Variation von Rührerdrehzahl und Fälltemperatur (Dosierung und Molverhältnisse im Gesamtansatz entsprechend Beispiel 3e, vergleiche Tabelle 3)

| Beispiel Nr. | Splitting der Aluminatlösung in %-Anteilen | Splitting der Silikatlösung in %-Anteilen | Rührerumfangsgeschwindigkeit a) | Fällungstemperatur | d b) | CaBv c) |
|---|---|---|---|---|---|---|
| 3e | 50+30+10+10 | ungesplittet | 6 m/sec | 65 °C | 5,0 | 162 |
| 4a | 60+20+20 | | | | 5,3 | 160 |
| 4b | 50+30+20 | ungesplittet | 6 m/sec | 65 °C | 5,2 | 162 |
| 4c | 40+40+20 | | | | 5,4 | 162 |
| 4d | 60+20+10+10 | | | | 5,2 | 168 |
| 4e | 40+30+20+10 | | | | 5,2 | 160 |
| 4f | 50+30+10+10 | | 4 m/sec | 65 °C | 6,6 | 152 |
| 4g | 50+30+10+10 | | | 80 °C | 4,9 | 151 |
| 4h | | 50+30+10+10 | | 65 °C | 6,3 | 150 |
| 4i | ungesplittet | 40+30+20+10 | 6 m/sec | 65 °C | 6,0 | 150 |
| 4k | | 40+40+20 | | 50 °C | 6,0 | 152 |

Beispiele 5 und 6

Zur Durchführung der nachstehenden Beispiele wurde eine Rührkolonne mit einem Fassungsvermögen von etwa 200 l und 23 Zwischenböden (entsprechend 24 Kammern) verwendet. Das Verhältnis Kammerhöhe zu Kolonnendurchmesser betrug 0,44. Die Böden wiesen konzentrische Öffnungen mit einem Durchmesser von 0,5 × Kolonnendurchmesser auf, die darüber im Abstand von ca. 1 mm befindlichen Scheiben jeweils einen Durchmesser von 0,7 × Kolonnendurchmesser. Die Rührerwelle 32 mit den Rührwerkzeugen für jede der Kammern (MIG-Rührer, Firma EKATO, Rührerdurchmesser 0,7 × Kolonnendurchmsser) war an den Kolonnenenden gelagert. Die Rührerdrehzahl war stufenlos bis zu einer Umfangsgeschwindigkeit von 8 m pro Sekunde regelbar.

Die Komponenten wurden aus grossen Vorlagebehältern 11 und 12 nach Aufheizung auf Fällungstemperatur über gesondert geeichte Dosiergeräte 13 und 14 (Schwebekörperdurchflussmessgeräte) direkt in die in den Beispielen näher bezeichneten Kammern der Rührkolonne gepumpt.

Eine Versuchsanordnung, die für die Aufteilung einer der beiden Komponenten in bis zu 4 Teilströmen geeignet ist, lässt sich aus dem vereinfachten Fliessschema gemäss Abbildung 5 entnehmen.

Beispiele 5a–5k

In diesen Beispielen wurden unter Beibehaltung der übrigen Fällungsbedingungen nur die Konzentrationen und Dosierungen der eingesetzten Natriumaluminat- und Natriumsilikat-Lösungen variiert. Die Fällungen wurden in der beschriebenen Rührkolonne bei konstanter Drehzahl des Rührers entsprechend einer Umfangsgeschwindigkeit von 6 Metern pro Sekunde durchgeführt. Die Lösungen wurden vor der Dosierung auf 65 °C aufgeheizt; mittels der Mantelheizung wurde die Rührkolonne ebenfalls auf konstant 65 °C temperiert. Die Aluminatlösungen wurden aus feuchtem Hydrargillit hergestellt.

Die Silikatlösung wurde (ohne Aufspaltung in Teilströme) mit den in Tabelle 5 angegebenen Konzentrationen und Dosierungen kontinuierlich jeweils in die Kammer 28 der Rührkolonne gepumpt. Die Aluminatlösung wurde jeweils in vier Teilströme aufgesplittet: ein Strom mit 50% des nach Tabelle 5 erforderlichen Gesamtdurchsatzes wurde kontinuierlich in die Kammer 28 geleitet, ein Strom von 30% des Gesamtdurchsatzes in die Kammer 29 und zwei Ströme von je 10% des Gesamtdurchsatzes in die Kammern 30 und 31 der Rührkolonne.

Das die Rührkolonne kontinuierlich verlassende amorphe Reaktionsgemisch wies eine Temperatur von 65–67 °C auf und war stets homogen und gut fliessfähig. Die Kornanteile grösser als 50 µm lagen unterhalb 1 Gew.-%. Die daraus nach 40 Minuten Kristallisation erhaltenen Produkte wurden in allen Fällen als hochkristallines, noch gebundenes Wasser enthaltendes Molekularsieb NaA mit einer chemischen Zusammensetzung entsprechend Molverhältnissen von 1,0 $Na_2O$ : 1,0 $Al_2O_3$ : 1,8–2,0 $SiO_2$ identifiziert. Das CaBv lag oberhalb 160 mg CaO/g Aktivsubstanz. Alle Produkte wiesen eine mittlere Teilchengrösse unterhalb 7 µm bei Korngrössenanteilen kleiner als 10 µm von über 95 Vol.-% auf. Der Nasssiebrückstand nach MOCKER betrug weniger als 1 Gew.-%.

In der nachfolgenden Tabelle bedeuten:

a) = kg/Stunde
b) = bezogen auf $Al_2O_3$ = 1,0
c) = mittlere Teilchengrösse in µm

Tabelle 5:
Beispiele mit unterschiedlichen Gesamtmolverhältnissen im Fällansatz unter Variation des Gesamtdurchsatzes (Fällung bei 65 °C, Rührerumfangsgeschwindigkeit 6 m/Sekunde, Splitting der Aluminatkomponente jeweils entsprechend 50% + 30% + 10% + 10%)

| Bei-spiel Nr. | Aluminatlösung %$Al_2O_3$ | %$Na_2O$ | Dosie-rung a) | Silikatlösung %$SiO_2$ | %$Na_2O$ | Dosie-rung a) | Gesamtmol-verhältnisse im Fällansatz b) $Na_2O$ | : $SiO_2$ | : $H_2O$ | Gesamt-durch-satz a) | d c) |
|---|---|---|---|---|---|---|---|---|---|---|---|
| 5a | 12,92 | 14,06 | 1185 | 12,35 | 7,85 | 947 | 2,6 | 1,3 | 60 | 2132 | 5,4 |
| 5b | | | 1422 | | | 1138 | | | | 2560 | 5,9 |
| 5c | 12,92 | 14,06 | 790 | 13,11 | 12,19 | 916 | 3,6 | 2,0 | 70 | 1706 | 5,5 |
| 5d | | | 1185 | | | 1375 | | | | 2560 | 5,2 |
| 5e | 12,43 | 17,38 | 819 | 10,26 | 7,66 | 1050 | 3,6 | 1,8 | 80 | 1869 | 4,4 |
| 5f | | | 1092 | | | 1400 | | | | 2492 | 4,7 |
| 5g | 10,12 | 18,45 | 1008 | 6,36 | 8,77 | 1698 | 5,4 | 1,8 | 120 | 2706 | 3,9 |
| 5h | 12,43 | 17,38 | 1232 | 16,17 | 8,36 | 1002 | 3,2 | 1,8 | 60 | 2234 | 5,7 |
| 5i | 10,12 | 18,45 | 1176 | 8,47 | 6,81 | 1488 | 4,4 | 1,8 | 100 | 2664 | 4,0 |
| 5k | | | 672 | | | 850 | | | | 1522 | 4,2 |

Beispiele 6a–6k

In diesen Beispielen wurden die Ansatz- und Konzentrationsverhältnisse während der Fällung konstant gehalten, dagegen die Aufteilung einer der beiden Komponenten in Teilströme, die Rührerdrehzahl sowie die Temperaturführung variiert. Die Aluminatlösung und die Silikatlösung wurden entsprechend Beispiel 5e dosiert, also mit insgesamt 819 kg Aluminatlösung (12,43% $Al_2O_3$ und 17,38% $Na_2O$) pro Stunde sowie insgesamt 1050 kg Silikatlösung (10,26% $SiO_2$ und 7,66% $Na_2O$) pro Stunde; daraus resultierte ein Gesamtmolverhältnis im Fällansatz von 3,6 $Na_2O$:1,0 $Al_2O_3$:1,8 $SiO_2$:80 $H_2O$. Die Aluminatlösung wurde aus technischem Natriummetaaluminat hergestellt.

Das Splitting der Komponenten (Aluminatlösung oder Silikatlösung) in unterschiedlich grosse Teilströme, die Einstellung der Rührerdrehzahl sowie die Temperatur der Komponenten kann den Angaben in Tabelle 6 entnommen werden.

Das die Rührkolonne kontinuierlich verlassende amorphe Reaktionsgemisch wies eine Temperatur entsprechend der Fälltemperatur auf und war stets homogen und gut fliessfähig. Die Kornanteile grösser als 50 µm lagen unterhalb 1 Gew.-%.

Die nach 40 Minuten Kristallisation erhaltenen Produkte wurden in allen Fällen als hochkristallines, nicht gebundenes Wasser enthaltendes Molekularsieb NaA mit einer chemischen Zusammensetzung entsprechend Molverhältnissen von 1,0 $Na_2O \cdot 1{,}0\ Al_2O_3 \cdot 1{,}8\ SiO_2$ identifiziert. Das Calciumbindevermögen lag bei oder oberhalb 160 mg CaO/g AS. Alle Produkte wiesen eine mittlere Teilchengrösse von unterhalb 7 µm bei Korngrössenanteilen kleiner als 10 µm von über 95 Vol.-% auf. Der Nasssiebrückstand nach MOCKER betrug weniger als 1 Gew.-%.

Die würfelförmigen Kristallite wiesen überwiegend abgerundete Kanten und eine Kantenlänge von 0,5 bis 3 µm auf.

In der nachfolgenden Tabelle bedeuten:

a) = Meter pro Sekunde
b) = mittlere Teilchengrösse in µm gemäss Coulter Counter
c) = Calciumbindevermögen nach 40 Minuten Kristallisation bei 85 °C

Tabelle 6:
Beispiele mit unterschiedlichem Splitting der Komponenten unter Variation von Rührerdrehzahl und Fälltemperatur (Dosierung und Molverhältnisse im Gesamtansatz entsprechend Beispiel 5e, vergleiche Tabelle 5)

| Bei-spiel Nr. | Splitting der Aluminatlösung in %-Anteilen | Splitting der Silikatlösung in %-Anteilen | Rührer-umfangs-geschwin-digkeit a) | Fällungs-temperatur | d b) | CaBv c) |
|---|---|---|---|---|---|---|
| 5e | 50+30+10+10 | ungesplittet | 6 m/sec | 65 °C | 4,4 | 168 |
| 6a | 60+20+20 | | | | 4,7 | 162 |
| 6b | 50+30+20 | ungesplittet | 6 m/sec | 65 °C | 4,6 | 165 |
| 6c | 40+40+20 | | | | 4,7 | 165 |
| 6d | 60+20+10+10 | | | | 4,6 | 170 |
| 6e | 40+30+20+10 | | | | 4,5 | 160 |

Tabelle 6 (Fortsetzung)

| Beispiel Nr. | Splitting der Aluminatlösung in %-Anteilen | Splitting der Silikatlösung in %-Anteilen | Rührerumfangsgeschwindigkeit a) | Fällungstemperatur | d b) | CaBv c) |
|---|---|---|---|---|---|---|
| 6f | 50+30+10+10 | ungesplittet | 4 m/sec | 65 °C | 6,0 | 155 |
| 6g | 50+30+10+10 | | | 80 °C | 4,2 | 155 |
| 6h | | 50+30+10+10 | | 65 °C | 5,7 | 155 |
| 6i | ungesplittet | 40+30+20+10 | 6 m/sec | 65 °C | 5,2 | 158 |
| 6k | | 40+40+20 | | 50 °C | 5,2 | 160 |

**Patentansprüche**

1. Verfahren zur kontinuierlichen Herstellung einer wässrigen, alkalischen Suspension feinteiliger röntgenamorpher Natriumaluminiumsilikate, die zu mindestens 99 Vol.-% eine Teilchengrösse von kleiner als 50 µm aufweisen und zur Umwandlung in feinstteilige zeolithische Natriumaluminiumsilikate befähigt sind, durch Vermischen einer wässrigen Natriumaluminatlösung mit einer wässrigen Natriumsilikatlösung in Gegenwart überschüssiger Natronlauge bei Temperaturen im Bereich von 20 bis 103 °C, wobei die beiden zu vermischenden Lösungen eine rechnerische Gesamtzusammensetzung bezüglich der Molverhältnisse von

1,5 bis 9 $Na_2O$:1 $Al_2O_3$:1 bis 7 $SiO_2$:40 bis 400 $H_2O$

aufweisen, dadurch gekennzeichnet, dass man eine der beiden Reaktionskomponenten kontinuierlich in eine stufig wirkende Mischstrecke einströmen lässt und die zweite Reaktionskomponente aufgeteilt in drei oder mehr Teilströme, deren Dosierung insgesamt durch die rechnerische Gesamtzusammensetzung der beiden Lösungen vorgegeben ist, mit der ersten Reaktionskomponente vermischt, wobei man mit dem ersten Teilstrom zunächst nur 40 bis 60% der zweiten Reaktionskomponenten, bezogen auf das durch die rechnerische Gesamtzusammensetzung vorgegebene Verhältnis der beiden Lösungen, dem Strom der ersten Reaktionskomponenten unmittelbar kontinuierlich zufügt und die weiteren Teilströme dem Strom des gebildeten Reaktionsgemisches erst stromabwärts, jeweils nach einer mittleren Verweilzeit der Reaktionspartner in der Mischstrecke von mindestens 5 Sekunden, gleichfalls kontinuierlich, zudosiert.

2. Verfahren nach Anspruch 1, dadurch gekennzeichnet, dass man den Rest der zweiten Reaktionskomponenten dem Strom des Reaktionsgemisches in zwei bis vier Teilströmen zudosiert, wobei die einzelnen Teilströme stromabwärts jeweils gleiche oder geringere prozentuale Anteile der zweiten Reaktionskomponenten, bezogen auf das durch die rechnerische Gesamtzusammensetzung vorgegebene Verhältnis der beiden Lösungen, umfassen.

3. Verfahren nach Ansprüchen 1 und 2, dadurch gekennzeichnet, dass man die Aluminatlösung als zweite Reaktionskomponente in Teilströme aufteilt.

4. Verfahren nach Ansprüchen 1 bis 3, dadurch gekennzeichnet, dass man das Vermischen der beiden Reaktionskomponenten bei einer bis auf Abweichungen von ±2 °C konstanten Temperatur, vorzugsweise im Bereich von 50 bis 80 °C, durchführt.

5. Verfahren nach Ansprüchen 1 bis 4, dadurch gekennzeichnet, dass man den Gesamtproduktstrom, bestehend aus dem Strom der ersten Reaktionskomponenten einerseits sowie den Teilströmen der zweiten Reaktionskomponenten andererseits, insgesamt mit einer Dosiergeschwindigkeit von 3 bis 30 $m^3$ Lösung, vorzugsweise mehr als 4 $m^3$ Lösung, pro Kubikmeter Mischervolumen und Stunde in die Mischstrecke einströmen lässt, wobei die mittlere Verweilzeit der Reaktionspartner in der Mischstrecke 2 bis 20 Minuten, vorzugsweise weniger als 15 Minuten, beträgt.

6. Verfahren nach Ansprüchen 1 bis 5, dadurch gekennzeichnet, dass man die einzelnen Teilströme der zweiten Reaktionskomponenten jeweils in unterschiedliche, durch Rohrleitungen miteinander verbundene, mit Rührvorrichtungen versehene Kessel einer Rührkesselkaskade, die mindestens so viele Kessel enthält, wie die zweite Reaktionskomponente an Teilströmen aufweist, einführt.

7. Verfahren nach Ansprüchen 1 bis 5, dadurch gekennzeichnet, dass man die einzelnen Teilströme der zweiten Reaktionskomponenten jeweils in unterschiedliche, durch Trennvorrichtungen abgeteilte, mit Rührvorrichtungen versehene Kammern einer horizontal gelagerten Mischstrekke, die in mindestens so viele Kammern unterteilt ist, wie die zweite Reaktionskomponente an Teilströmen aufweist, einführt.

8. Verfahren nach Ansprüchen 1 bis 5, dadurch gekennzeichnet, dass man die einzelnen Teilströme der zweiten Reaktionskomponenten jeweils in unterschiedliche, durch Zwischenböden abgeteilte Kammern einer vorzugsweise vertikal angeordneten Rührkolonne, die mindestens vier Zwischenböden aufweist, einführt.

**Claims**

1. A process for the continuous production of an aqueous alkaline suspension of finely particulate

X-ray amorphous sodium aluminium silicates, of which at least 99% by volume have a particle size of smaller than 50 µm and which are capable of being converted into very finely particulate zeolitic sodium aluminium silicates, by mixing an aqueous sodium aluminate solution with an aqueous sodium silicate solution in the presence of excess sodium hydroxide at temperatures in the range from 20 to 103 °C, the two solutions to be mixed having a theoretical overall composition in regard to the molar ratios of from 1.5 to 9 $Na_2O$:1 $Al_2O_3$:1 to 7 $SiO_2$:40 to 400 $H_2O$, characterised in that one of the two reaction components is allowed to flow continuously into a mixing zone operating in stages whilst the second reaction component is mixed with the first reaction component after separation into three or more component streams, of which the overall dosage is determined by the theoretical overall composition of the two solutions, the first component stream initially introducing only 40 to 60% of the second reaction component, based on the ratio between the two solutions as determined by the theoretical overall composition, directly into the stream of the first reaction component on a continuous basis and the other component streams being introduced – again continuously – into the stream of the resulting reaction mixture at a point situated downstream, in each case after an average residence time of the reactants in the mixing zone of at least 5 seconds.

2. A process as claimed in Claim 1, characterised in that the remainder of the second reaction component is added to the stream of reaction mixture in two to four component streams, the individual component streams downstreamcontaining the same or smaller percentage quantities of the second reaction component, based on the ratio between the two solutions as determined by their theoretical overall composition.

3. A process as claimed in Claims 1 and 2, characterised in that the aluminate solution as the second reaction component is separated into component streams.

4. A process as claimed in Claims 1 to 3, characterised in that the two reaction components are mixed at a temperature of from 50 to 80 °C which remains constant to within $\pm 2$ °C.

5. A process as claimed in Claims 1 to 4, characterised in that the total product stream consisting of the stream of the first reaction component on the one hand and the component streams of the second reaction component on the other hand is allowed to flow into the mixing zone at a total metering rate of from 3 to 30 $m^3$ of solution and preferably of more than 4 $m^3$ of solution per cubic metre of mixer volume per hour, the average residence time of the reactants in the mixing zone amounting to between 2 and 20 minutes and preferably to less than 15 minutes.

6. A process as claimed in Claims 1 to 5, characterised in that the individual component streams of the second reaction component are each introduced into different stirrer-equipped vessels, interconnected by pipes, of a cascade of stirrer-equipped vessels which comprises at least as many vessels as there are component streams of the second reaction component.

7. A process as claimed in Claims 1 to 5, characterised in that the individual component streams of the second reaction component are each introduced into different stirrer-equipped chambers, divided off by partitions, of a horizontally mounted mixing zone which is divided into at least as many chambers are there are component streams of the second reaction component.

8. A process as claimed in Claims 1 to 5, characterised in that the individual component streams of the second reaction component are each introduced into different chambers, divided off by intermediate plates, of a preferably vertically arranged stirrer-equipped column comprising at least four intermediate plates.

**Revendications**

1. Procédé pour la préparation continue d'une suspension aqueuse alcaline d'aluminosilicates de sodium en fines particules amorphes aux rayons X, ayant pour au moins 99% en volume une dimension de particule inférieure à 500 microns, et apte à une conversion en aluminosilicates de sodium zéolithiques en particules extrêmement fines, par mélange d'une solution aqueuse d'aluminate de sodium avec une solution aqueuse de silicate de sodium en présence d'un excès de lessive de soude à des températures dans l'intervalle de 20 à 103 °C, les deux solutions à mélanger ayant une composition globale calculée et exprimée en rapports molaires de:

$$1{,}5 \text{ à } 9\ Na_2O:1\ Al_2O_3:1 \text{ à } 7\ SiO_2:40 \text{ à } 400\ H_2O,$$

caractérisé en ce que l'on introduit en continu un courant de l'un des deux composants de réaction dans un trajet de mélange agissant par étages, et on mélange avec le premier composant de réaction le second composant de réaction subdivisé en trois courants partiels ou plus dont le dosage total est déterminé par la composition globale calculée des deux solutions, en ajoutant d'abord au courant du premier composant de réaction, immédiatement et en continu, par le premier courant partiel, 40 à 60% seulement du second composant de réaction, relativement au rapport des deux solutions déterminé par la composition globale calculée, et en ajoutant, également en continu, les autres courants partiels au courant du mélange de réaction formé en aval, dans chaque cas après une durée de séjour moyenne d'au moins 5 s des réactifs dans le trajet de mélange.

2. Procédé selon la revendication 1, caractérisé en ce que l'on ajoute le reste du deuxième composant de réaction au courant du mélange de réaction en deux à quatre courants partiels, les courants partiels individuels comprenant dans chaque cas des proportions % égales ou plus faibles du second composant de réaction, relativement au rapport des deux solutions déterminé par la composition globale calculée.

3. Procédé selon les revendications 1 et 2, caractérisé en ce que l'on subdivise la solution d'aluminate, en tant que second composant de réaction, en courants partiels.

4. Procédé selon les revendications 1 à 3, caractérisé en ce que le mélange des deux composants de réaction est effectué à une température constante dans une limite de $\pm 2\,°C$, de préférence dans l'intervalle de 50 à 80 °C.

5. Procédé selon les revendications 1 à 4, caractérisé en ce que l'on fait couler dans le trajet de mélange le courant de produit total consistant en le courant du premier composant de réaction, d'une part, et les courants partiels du second composant de réaction, d'autre part, au total à un débit d'introduction de 3 à 30 $m^3$ de solution, de préférence plus de 4 $m^3$ de solution, par $m^3$ de volume du mélangeur et par heure, la durée de séjour moyenne des réactifs dans le trajet de mélange étant de 2 à 20 min, et de préférence inférieure à 15 min.

6. Procédé selon les revendications 1 à 5, caractérisé en ce que l'on introduit les courants partiels individuels du second composant de réaction chacun dans un réacteur différent, équipé d'un dispositif d'agitation, d'une série de réacteurs équipés de dispositifs d'agitation et reliés entre eux par des conduits, la série contenant des réacteurs en nombre au moins égal au nombre des courants partiels du second composant de réaction.

7. Procédé selon les revendications 1 à 5, caractérisé en ce que les courants partiels individuels du second composant de réaction sont introduits chacun dans une chambre différente équipée d'un dispositif d'agitation, compartimentée par des dispositifs de séparation, d'un trajet de mélange en disposition horizontale qui est subdivisé en un nombre de chambres au moins égal au nombre de courants partiels du second composant de réaction.

8. Procédé selon les revendications 1 à 5, caractérisé en ce que les courants partiels individuels du second composant de réaction sont introduits chacun dans une chambre différente, compartimentée par des plateaux intermédiaires, d'une colonne en disposition de préférence verticale, équipée de dispositifs d'agitation, et qui contient au moins quatre plateaux intermédiaires.

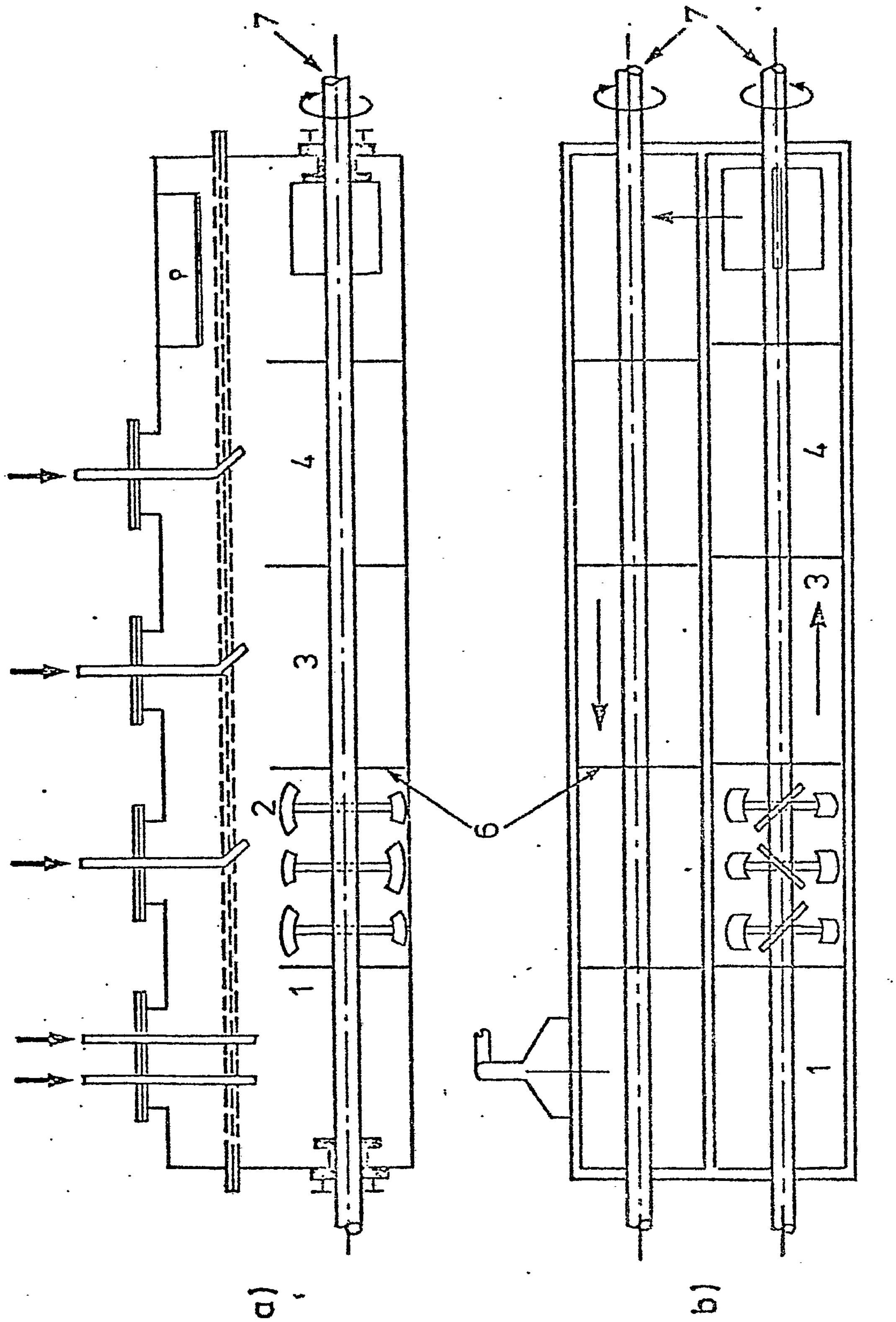


Abbildung 1

a)

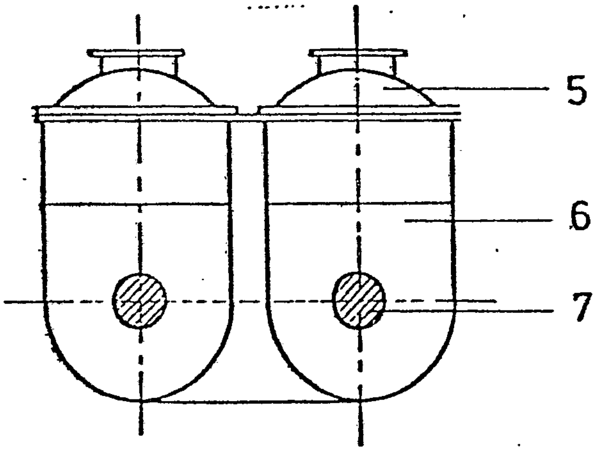


b)

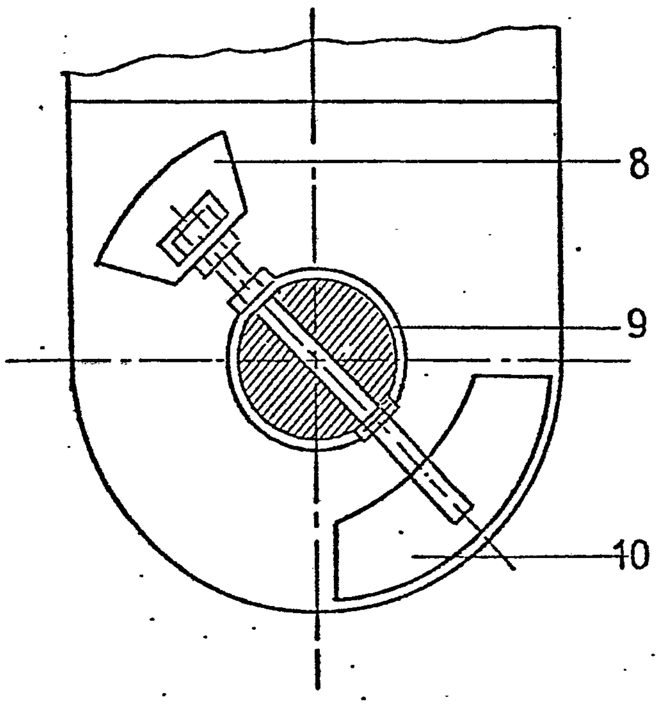


Abbildung 2

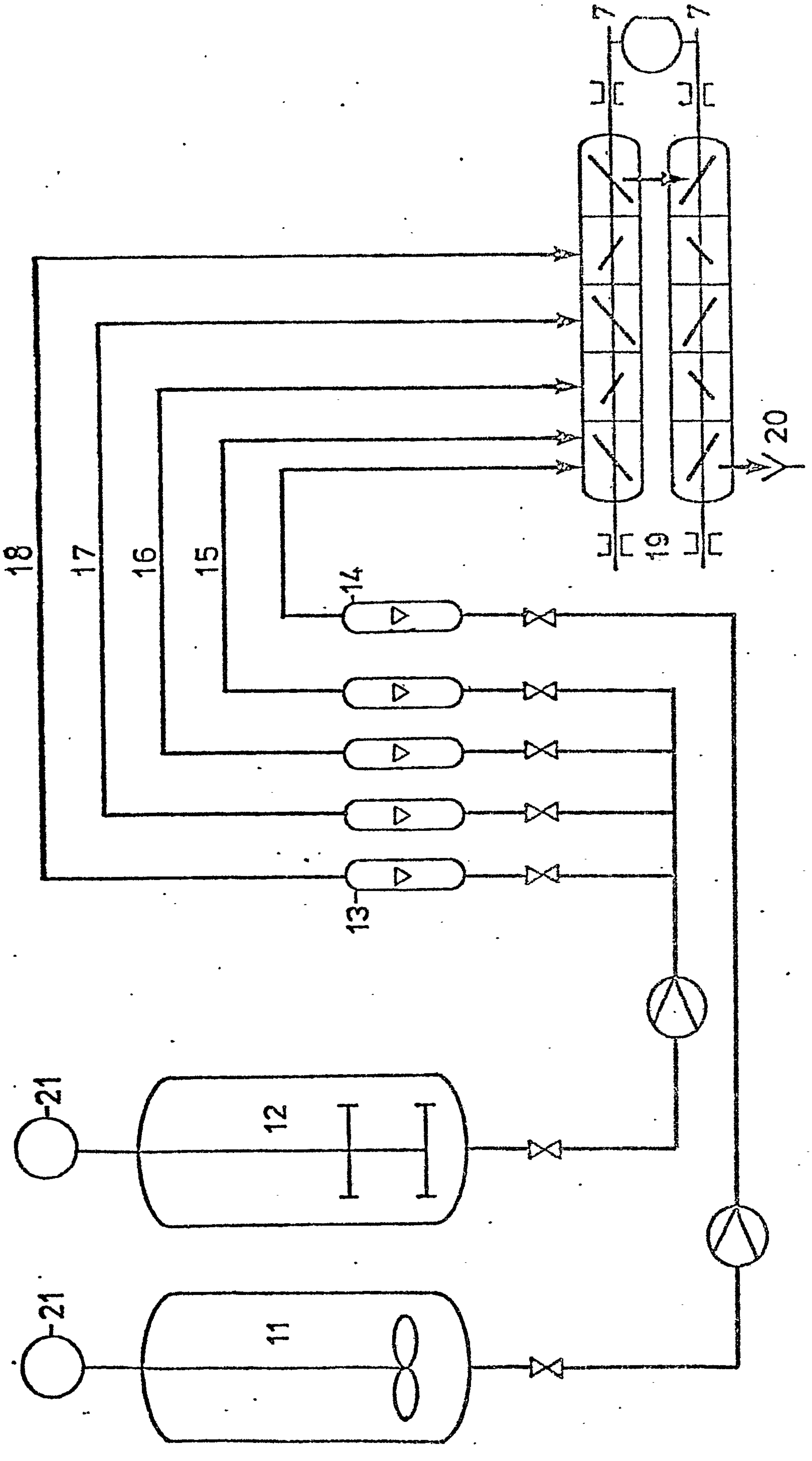


Abbildung 3

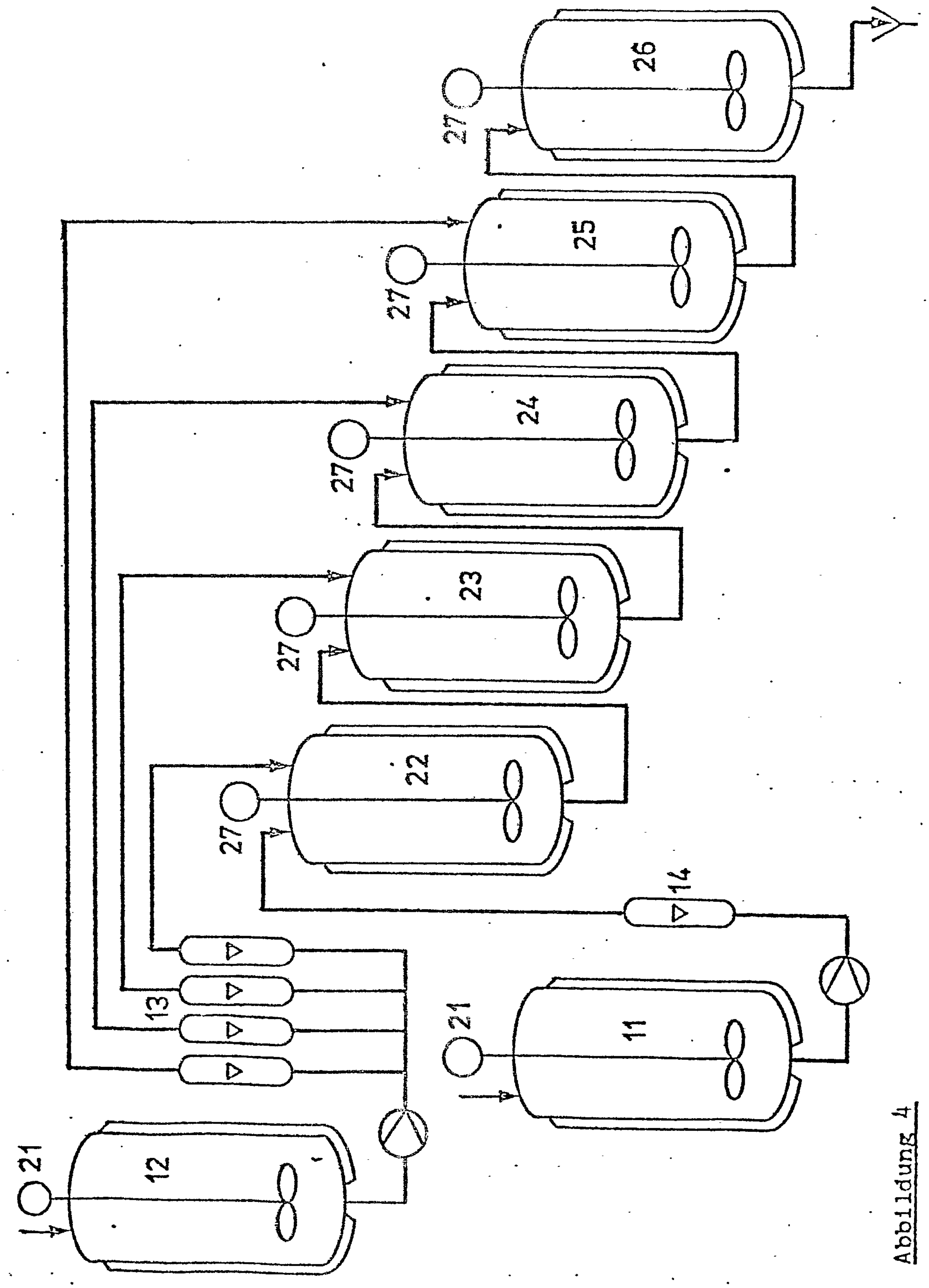


Abbildung 4

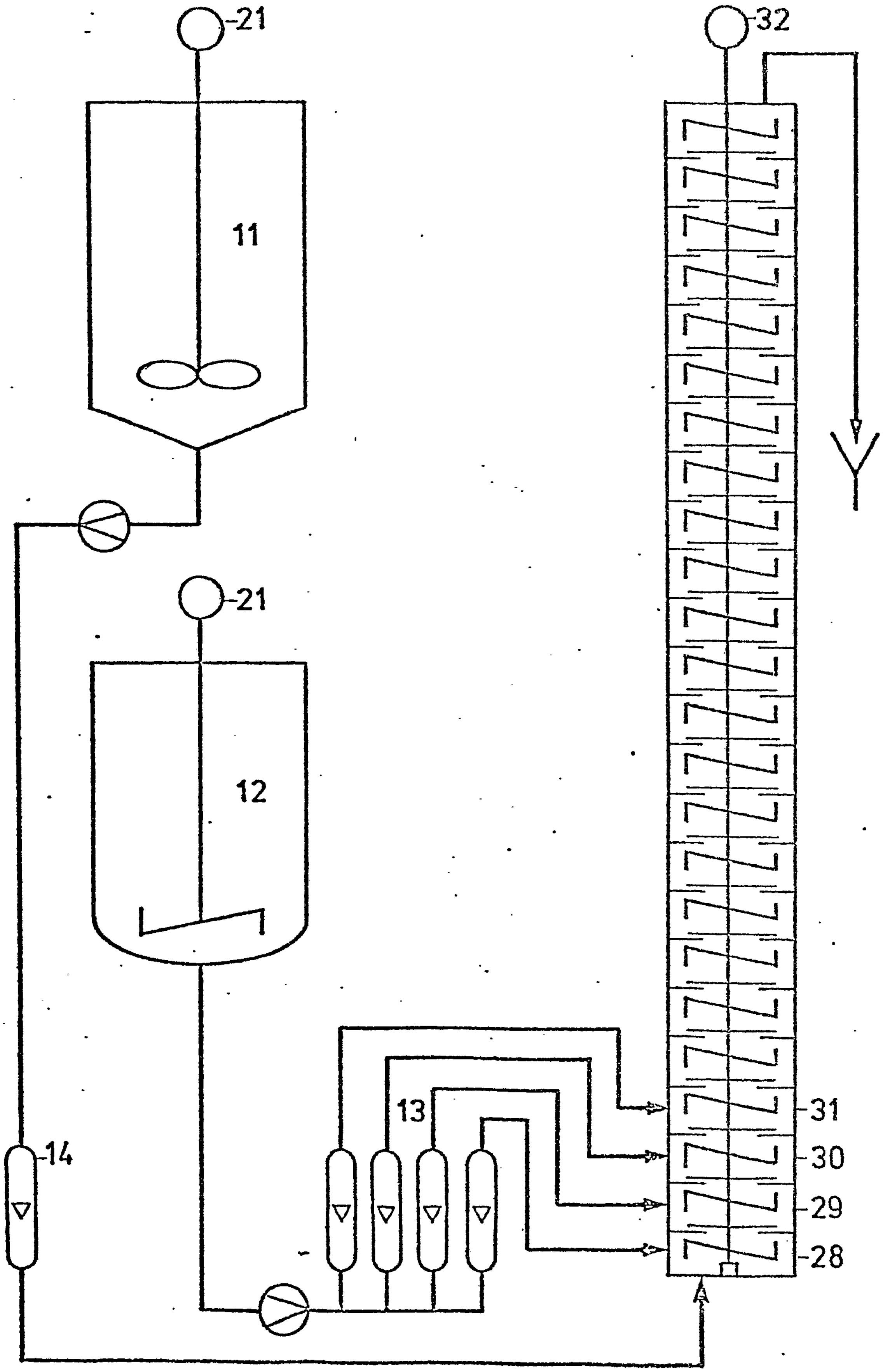


Abbildung 5